# EUROPEAN PATENT SPECIFICATION

(11) **EP 2 484 682 B1**
(45) Date of publication and mention of the grant of the patent: **13.08.2014**
(21) Application number: 10820873.7
(22) Date of filing: 30.09.2010
(51) Int. Cl.: C07D 487/14, H01S 3/213

(54) **SYNTHESIS OF BORON DIPYRROMETHENES WITH LASER PROPERTIES**
SYNTHESE VON BORON-DIPYRROMETHENEN MIT LASEREIGENSCHAFTEN
SYNTHÈSE DE BORODIPYRROMÉTHÈNES À PROPRIÉTÉS DE LASER

(30) Priority: 30.09.2009 MX MX09010555
(43) Date of publication of application: 08.08.2012
(73) Proprietor: Universidad de Guanajuato, C.P. 36000 Guanajuato (MX)
(72) Inventor: PEÑA CABRERA, Eduardo, C.P. 36000 Guanajuato (MX); ARROYO CORDOVA, Ismael Javier, C.P. 36000 Guanajuato (MX); LOPEZ VALLEJO, Fabiola Irene, C.P. 36000 Guanajuato (MX)
(74) Representative: Elzaburu Marquez, Alberto
(86) International application number: PCT/MX2010/000100
(87) International publication number: WO 2011/040800

(56) References cited:
- CN-A- 101 550 156
- JUNYAN HAN ET AL: "3- and 5-Functionalized BODIPYs via the Liebeskind-Srogl reaction", ORGANIC & BIOMOLECULAR CHEMISTRY, vol. 7, no. 1, 1 January 2009 (2009-01-01) , page 34, XP55054319, ISSN: 1477-0520, DOI: 10.1039/b818390b
- A. COSTELA, I.GARCIA-MORENO, J. BARROSO, R. SASTRE: "Studies on laser action frompolymericmatrices doped withcoumarin 503", APPLIED PHYSICS B; LASERS AND OPTICS, vol. 67, 1998, pages 167-173, XP002692683,
- WANG, D. ET AL.: '4,4-Difluoro-8-methyl-4-bora- 3a,4a-diaza-s-indacene' ACTA CRYSTALLOGRAPHICA, SECTION E: STRUCTURE REPORTS vol. E63, no. 5, 2007, pages 2238 - 2239
- HIRTZ, M. ET AL.: 'Structures Polymer Brushes by AFM Lithography' SMALL vol. 5, no. 8, 2009, pages 919 - 923
- PENA-CABRERA, E. ET AL.: 'Simple, General, and Efficient Synthesis of Meso-Substituted Borondipyrromethenes from a Single Platform' ORGANIC LETTERS vol. 9, no. 20, 2007, pages 3985 - 3988
- DATABASE WPI Week 200442, Derwent Publications Ltd., London, GB; AN 2004-444128 & JP 2004 138875 A (KONS, KONICA CORP) 13 May 2004

## Description

### OBJECT OF THE INVENTION

The purpose of this invention is the synthesis of three different 8-alkylborondipyrromethenes from 8-alkenylborondipyrromethenes. The 8-alkylborondipyrromethenes have great potential for being applied as laser colorants because they emit in the green region of the spectrum and have an efficiency of up to 1.8 times more, as well as a notably higher photosensitivity to other commercial colorants that are used for laser manufacturing. The protection and process of the synthesis and the products as such is proposed.

### BACKGROUND

From its discovery in 1968, the boron dipyrromethenes have been synthesised by complicated methodologies, which involve various stages, long reaction times, tedious purifications and poor outputs. From 1990 the possible application of boron dipyrromethenes as a laser has been described in the literature. However, there are no compounds of this type on the market and those that do exist, like the coumarins, are very expensive. In our research group, we developed a methodology for the synthesis of 8-alkenylborondipyrromethene, which are the precursors for the 8-alkylborondipyrromethenes, which show the laser colorant activity. After a catalytic reduction of the 8- alkenylborondipyrromethene through hydrogenation, it was possible to obtain the compounds I, II and III, with the advantage that they have a better laser output in comparison to the commercial coumarins 540A and 503, which are used for the same purpose; and also its synthesis is only carried out in 2 stages.

Another advantage of these types of compounds is their structure, which is relatively simple; it does not have voluminous functional groups which translate into its ease of synthesis.

The invention that we wish to protect is a family of 8-alkylborondipyrromethenes (3 examples), which were synthesised from the Liebeskind-Srogl coupling using a catalytic amount of Palladium (0), 7.5% of trifurylphosphine (TFP) and a stoichiometric amount (3 equivalents) of a Cu(I) salt (equations 1 and 2). Later, the catalytic reduction is carried out with hydrogen using palladium on carbon as a catalyst. It is important to mention that there is no general synthesis reported for obtaining 8-alkenylborondipyrromethene and much less for 8-alkylborondipyrromethenes.

In this way, a family of 8-alkylborondipyrromethenes was synthesised in very short reaction times (from 20 to 78 minutes) and the outputs go from 62 to 80%.

As already mentioned, the advantages that this invention brings with it in the synthesis of 8-alkenylborondipyrromethene are the reaction time and the Liebeskind-Srogl coupling, which uses soft conditions in order to synthesise them. In this coupling we use neutral reaction conditions. Another important advantage is the use of boronic acids like the commercial alkenylboronic acids used during this process. The catalytic hydrogenation is similarly carried out in soft conditions; with ethanol, molecular hydrogen, palladium on carbon and agitation.

Therefore, the novelty of this invention is the synthesis process of the 8-alkenylborondipyrromethenes and the application they have as laser colorants. Currently, there are molecules like the coumarins and other more complex boron dipyrromethenes, for their use as laser colorants, but their preparation is very expensive owing to the complex synthesis route. However, the synthesis developed, as already mentioned, is relatively simple, fast and allows having a family that has a laser emission in the green range of the spectrum.

In our research group, we develop colorants that have very interesting optical properties. When preparing the three members from the family of the 8-alkylborondipyrromethenes, their laser efficiency was determined. The results obtained demonstrated that they are compounds that can be used as laser colorants with an efficiency higher than already marketed compounds and with an emission wavelength of much interest because of its application.

### BRIEF DESCRIPTION OF THE FIGURES

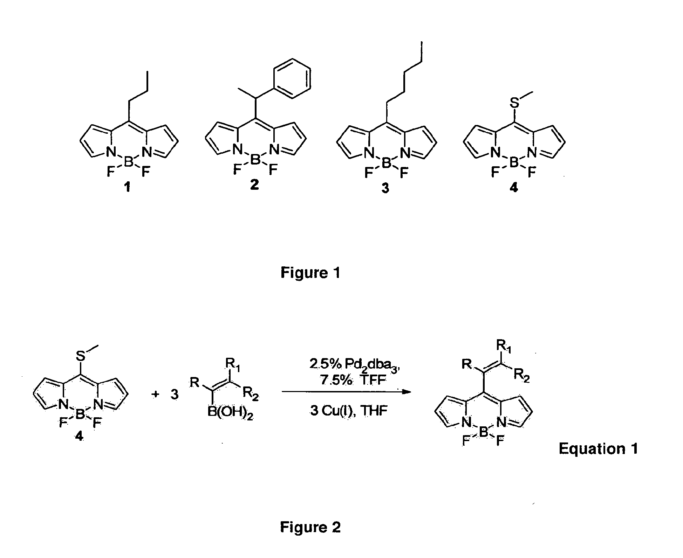

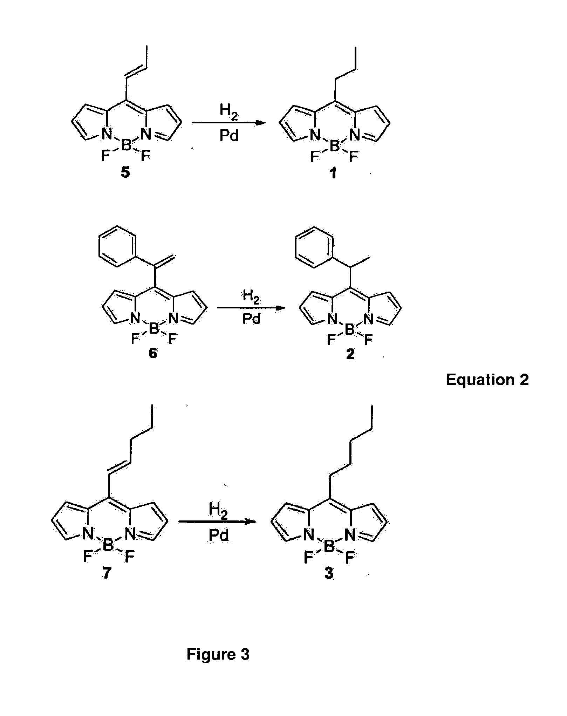

Figure 1 represents propylborondipyrromethene, this compound is obtained from a catalytic reduction of the 8-alkenylborondipyrromethene **5**. Figure 2 represents 8-(1-phenylethyl)boron dipyrromethene, synthesised from its corresponding alkenylborondipyrromethene **6**. Figure 3 corresponds to the 8-pentylborondipyrromethene from alkenylborondipyrromethene **7**. In equation 1, the Liebeskind-Srogl coupling is shown with which the 8-alkenylborondipyrromethene are synthesised **5, 6** and **7**, precursors of **1, 2** and **3**. In figure 2, the second stage in the synthesis of 8-alkylborondipyrromethene is presented: the catalytic reduction with hydrogen and catalysed with palladium.

### DETAILED DESCRIPTION OF THE INVENTION

The family of 3 members from 8-alkyldipyrromethene is obtained in 2 stages. The first one: the synthesis of alkenylborondipyrromethene corresponding through a cross-coupling of Liebeskind-Srogl in a selective way on position 8 of the boron dipyrromethene. Alkenylboronic acids are used in order to functionalise this position and obtain the 3 members, of which there are no reports of any alternative synthesis. These compounds are obtained in outputs that go from 79-97% in no longer than 30 minutes and are considered good.

In this coupling 1.0 equivalents of thiomethylborondipyrromethene **4** are made to react with 3.0 equivalents of alkenylboronic acids, using as a catalytic system 2.5% of tris(dibenzylideneacetone) Pd 0 (Pd₂dba₃), 7.5% of trifurylphosphine (TFP) and 3.0 equivalents of copper thiophenecarboxylate (CuTc).

The following stage consists of a catalytic hydrogenation carried out in an ethanolic medium with molecular hydrogen and using palladium over carbon as a catalytic system. During this stage, the molecules of the family of 8-alkylborondipyrromethene are obtained in outputs of 62-80% in times no longer than 78 minutes.

From these stages, compounds I, II and III with the following characteristics were synthesised:

**8-propylborondipyrromethene** (figure 1). Has a reaction time of 20 minutes with an output of 97% in the first stage of synthesis and in the second stage, after 55 minutes an output of 88%. Presented as orange crystals. CCF (20% AcOEt/Hexanes) Rf = 0.4 cm; p.f. 65.0 - 66.0 °C; IR (KBr, cm-1): 955(f), 1072(f), 1115(f), 1262(f), 1396(f), 1414(f), 1571(f), 706(m), 739(m), 779(m), 2875(m), 2927(m), 2962(m), 588(d), 621 (d), 2336(d), 3111(d); 1H RMN (200 MHz, CDCl3) δ; 1.06(6H, m, *J*=7.4 Hz), 1.85 (2H, m *J*=7.4Hz), 2.92 (2H, m, *J*=7.6Hz), 6.54 (2H, d, *J*=3.6), 7.30 (2H, s), 7.86 (2H, s); 13C RMN (75.5 MHz, CDCl3), δ: 14.7, 27.3, 33.2, 118.1, 128.1, 135.5, 143.6, 151.1.

This compound has a laser efficiency of 23.6% in ethyl acetate using an Nd: YAG laser at 355 nm as excitation wavelength.

**8-phenylethylborondipyrromethene** (figure 2). It has a reaction time of 30 minutes with an output of 88% for the first stage of synthesis and in the second stage after 78 minutes, an output of 62% was obtained. Obtained as green crystals. CCF (20% AcOEt/Hexanes) Rf = 0.7 cm; p.f. 70.0 - 72.0 °C; IR (KBr, cm-1): 1055(f), 1070(f), 1083(f), 1095(f), 1253(f), 1394(f), 1556(f), 701(m), 734(m), 771 (m), 941 (m), 983(m), 1231(m), 1354(m) 586(d), 2922(d), 3112(d), 3693(d); 1H RMN (200 MHz, CDCl3) δ; 1.26 (2H, s), 1.93 (3H, d, *J*=- 7.4Hz), 4.75 (1H, m *J*=7.4Hx), 6.46 (2H, d, *J*=3.0Hz), 7.13 (2H, d, *J*=4.4Hz), 7.31 (3H, m), 7.36 (4H, d, *J*=4.6Hz), 7.84 (2H, s); 13C RMN (75.5 MHz, CDCl3), δ: 22.1, 29.9, 40.8, 118.4, 127.3, 129.0, 129.5, 135.0, 143.0, 143.7, 155.0.

It has a laser efficiency of 0.84% in ethyl acetate using an Nd: YAG laser at 355 nm as excitation wavelength.

**8-pentylborondipyrromethene** (figure **3**). It has a reaction time of 12 minutes with an output of 79% for the first stage of synthesis. In the second stage after 20 minutes, obtained with an output of 75%. Presented as orange crystals. CCF (20% AcOEt/Hexanes) Rf = 0.8 cm; p.f. 51.5 - 52.0 °C; IR (KBr, cm-1): 704(f), 732(f), 767(f), 952(f), 1062(f), 1112(f), 1257(f), 1392(f), 1565(f), 865(m), 1195(m), 1228(m), 1355(m), 1463(m) 1482(m) 2929(m) 1303(d), 2861(d), 2956(d), 3120(d); 1H RMN (200 MHz, CDCl3) δ; 0.92 (3H, dd, *J=6.2*, 7.0Hz), 1.43 (4H, dd, J=3.6, 13.3Hz), 1.80 (2H, m *J*=7.0Hz), 2.93 (2H, m, *J*=7.8Hz), 6.54 (2H, d, *J*=3.4Hz), 7.28 (2H, d *J*=5.8Hz); 13C RMN (75.5 MHz, CDCl3), δ|: 14.1, 22.5, 31.4, 32.3, 33.8, 118.1, 128.0, 135.4, 143.4, 151.5.

It has a laser efficiency of 19.7% in ethyl acetate using an Nd: YAG laser at 355 nm as excitation wavelength.

The compounds of this patent show an advantage over molecules like coumarins in that their laser efficiency is 240 times higher.

Another advantage, as already mentioned, is that its synthesis is simple since only 5 hours are required to obtain it pure and all the reagents are commercially available.

These compounds present the property of emitting in the green region of the electromagnetic radiation spectrum, which represents an important application area because the lasers emitted in the green, can be applied in the field of medicine, biotechnology, due to its power.

### EXAMPLES

The evaluation of laser efficiency for the 8-propylborondipyrromethene (figure 1) was carried out in the aqueous phase and in methacrylic matrices.

Experiments performed: Firstly, the laser efficiency in **liquid phase** was carried out according to the concentration and the dissolvents, which allows determining the optimal working concentration and gives an idea of the monomers that can later be used in the solid phase study. The optimal concentration for obtaining the maximum specific laser efficiency is 3.0 mM. At lower concentrations, the excitation light crosses the sample in such a way that its emission is not confined to the surface of the tray. We observe that, in general, the synthesis colorant is the one that shows more laser efficiency in the dissolvents studied like acetone, methanol, etahnol and trifluoroethanol (except in cyclohexane). Given that most of the efficiency is recorded in acetone and trifluoroethanol, methyl methacrylate (MMA) and trifluoroethyl methacrylate (TFMA) are chosen as the monomers for the synthesis of solid matrices.

Later, this colorant was incorporated into different methacrylic matrices and its efficiency and laser stability were determined when radiated with an Nd laser: YAG at 355 nm with a repetition frequency of 5 Hz and an energy of 5.0 mJ/pulse. In order to choose a matrix, it is necessary to reach a compromise between efficiency and stability, which is why the matrix that has given the best results in this case has been the PMMA. For this study, the following results were obtained:

Measurements of laser efficiency/stability in linear matrices for 8-propylborondipyrromethene.

| PMMA | Max. laser efficiency (%) | λ Max em. (nm) | Δλ (nm) | Pulse No: (50% stability) | Final stability % |
|---|---|---|---|---|---|
| 10 | 24.5 | 537.1 | 2.51 | 17143 | 43.3 ₁₇₃₀₀ₚ |

Measurements of laser efficiency/stability in fluorinated matrices for 8-propylborondipyrromethene.

| COP(MMA/TFMA) | Max. laser efficiency (%) | λMax em. (nm) | Δλ\| (nm) | Pulse No: (50% stability) | Final stability % |
|---|---|---|---|---|---|
| 9/1 | 27.1 | 536.4 | 2.76 | --- | 53.6 ₁₁₀₀ₚ |
| 7/3 | 18.5 | 535.5 | 3.52 | --- | 58.7 ₅₅₀₀ₚ |

In parallel terms, a comparative test has been carried out with a commercial colorant, Coumarin 540A, which emits in the same spectrum region.

Coumarin 540A was also introduced to PMMA, however it does not present a laser emission under the synthesis conditions of the matrix used, which is why it has not been possible to directly compare both results. Nevertheless, from previous results obtained for another similar coumarin, CU 503 (Appl. Phys. B, 67 (1998) 167 - 173), the following comparative data can be extracted:

Coumarin 503 5.10-3 M. Laser N2. Pump energy: 1.2 mj/pulse. Repetition frequency: 2 Hz.

| **PMMA** | Max. laser efficiency (%) | λMax em. (nm) | Δλ\| (nm) | Final stability % |
|---|---|---|---|---|
| 10 | 15 | 473 | 9 | 0 ₁₇₀₀ₚ |

In summary, we can conclude from the results that a new boron dipyrromethene is used that emits a laser light in the green region of the spectrum (very interesting wavelengths because of their applications), with a considerable laser efficiency and a notably superior photosensitivity to those of the commercial Coumarins currently used as laser colorants.

## Claims

1. 8-Alkylboron-dipyrromethenes compounds according to any one of the formulas: 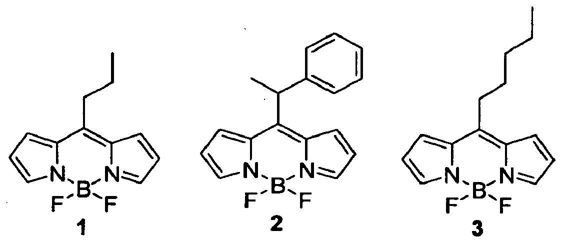 obtainable by a process comprising the steps of:
a) reacting a compound of formula 4: 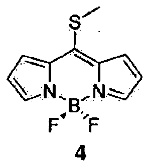 using the Liebeskind-Srogl coupling, with a compound selected from the group consisting of: 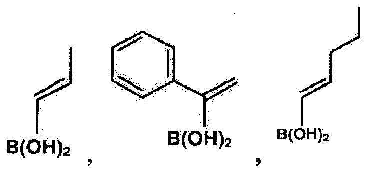
b) followed by catalytic hydrogenation in ethanol medium with molecular hydrogen using palladium on carbon as catalyst system.

2. 8-Alkylboron-dipyrromethenes compounds according to claim 1, wherein the Liesbeskind-Srogl coupling is carried out in position 8 of the compound of formula 4.

3. 8-Alkylboron-dipyrromethenes compounds according to claims 1 or 2 wherein the catalyst system used in step a) of the process is 2.5% of tris(dibenzylideneacetone), Pd(0) (Pd₂dba₃) 7.5% of trifurylphosphine (TFP) and 3.0 equivalents of copper thiphenecarboxylate (CuTc);

4. Use of the compounds according to any one of claims 1-3 as laser light emitters in the green region of the electromagnetic spectrum.

## Patentansprüche

1. 8-Alkylbordipyrromethen-Verbindungen nach irgendeiner der Formeln: 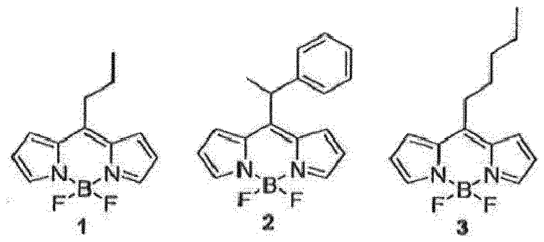 erhältlich durch ein Verfahren, das folgende Schritte umfasst:
a) Umsetzung einer Verbindung der Formel 4: 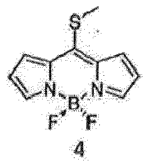 unter Verwendung der Liebeskind-Srogl-Kupplung mit einer Verbindung, die ausgewählt wird aus der Gruppe bestehend aus: 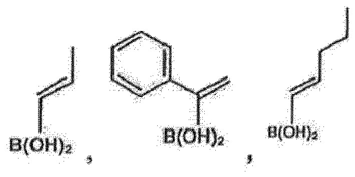
b) anschließende katalytische Hydrierung mit molekularem Wasserstoff in Ethanolmedium unter Verwendung von Palladium-Kohle als Katalysatorsystem.

2. 8-Alkylbordipyrromethen-Verbindungen nach Anspruch 1, wobei die Liebeskind-Srogl-Kupplung an Position 8 der Verbindung der Formel 4 vorgenommen wird.

3. 8-Alkylbordipyrromethen-Verbindungen nach Anspruch 1 oder 2, wobei das im Verfahrensschritt a) eingesetzte Katalysatorsystem aus 2,5 % tris(Dibenzylidenaceton), Pd(0) (Pd₂dba₃) 7,5 % Trifurylphosphin (TFP) und 3,0 Äquivalente Kupferthiphencarboxylat (CuTc) besteht.

4. Verwerdung der Verbindungen nach irgendeinem der Ansprüche 1 bis 3 als Laserlichtquelle im grünen Bereich des elektromagnetischen Spektrum.

## Revendications

1. Composés 8-Alkylbore-dipyrrométhénes selon n'importe laquelle des formules : 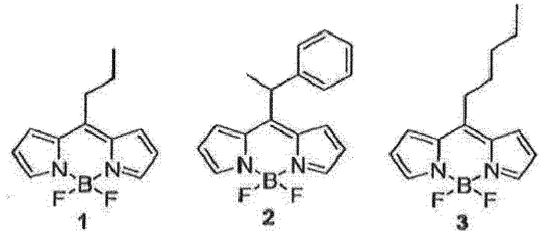 prouvant être obtenus par un procédé comportant les étapes consistant à :
a) faire réagir un composé de formule 4 : 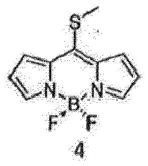 en utilisant le couplage de Lîebeskind-Srogl, avec un composé sélectionné dans le groupe composé de : 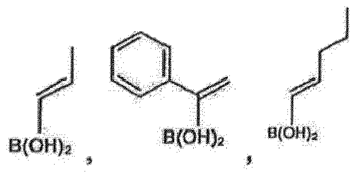
b) suivi d'une hydrogénation catalytique dans un milieu d'éthanol avec de l'hydrogène moléculaire en utilisant du palladium sur charbon comme système catalyseur.

2. Composés 8-Alkylbore-dipyrrométhènes selon la revendication 1, dans lesquels le couplage de Liebeskind-Srogl est réalisé en position 8 du composé de formule 4.

3. Composés 8-Alkylbore-dipyrrométhénes selon les revendications 1 ou 2, dans lesquels le système catalyseur utilisé dans l'étape a) du procédé est de 2,5% de tris(dibenzylideneacetone), Pd(0) (Pd₂dba₃) 7,5% de trifurylphosphine (TFP) et 3,0 équivalents de thiophène carboxylate de cuivre (CuTc).

4. Utilisation des composés selon n'importe laquelle des revendications 1 à 3 comme émetteurs de lumière laser dans la région verte du spectre électromagnétique.
